# EUROPEAN PATENT APPLICATION

(11) **EP 4 434 739 A1**
(43) Date of publication of application: **25.09.2024**
(21) Application number: 22894038.3
(22) Date of filing: 16.11.2022
(51) Int. Cl.: B32B 1/02, B32B 27/10, B32B 27/40, B65D 65/40, B65D 81/34

(54) **BIODEGRADABLE PACKAGING AND METHOD FOR MANUFACTURING SAME**

(30) Priority: 18.11.2021 BR 102021023134; 30.05.2022 BR 102022010575; 03.11.2022 BR 132022022389
(71) Applicant: All4labels Gráfica do Brasil Ltda., 89032-510 Blumenau (BR); Tecnoveg Indústria e Comércio Ltda., 88514-890 Lages (BR)
(72) Inventor: NEVES FERRI, Gabriela, 89057-670 BLUMENAU (BR); DONIZETI CURCIO, Luciano, Bairro Vila Bom Gosto (BR)
(74) Representative: Pereira da Cruz, Joao
(86) International application number: PCT/BR2022/050442
(87) International publication number: WO 2023/087088

(57) **Abstract**

The present invention refers to a biodegradable, recyclable, compostable, sealable and thermoformed packaging to be used in the packaging of foodstuffs, personal and household care products, as well as its manufacturing method;
Problem to be solved: To provide a simple, low-cost and easy-to-manufacture solution able to go in a cooking oven and thus withstand "high" temperatures, which is compostable, recyclable and biodegradable and is also made from a renewable and non-food raw material.

Solution to the problem: For that purpose, a biodegradable packaging is proposed, said packaging being composed of layers, being a substrate (10) made of paper, and a coating (20), coating the substrate (10), comprising a biodegradable resin, said biodegradable resin being of vegetable origin, said vegetable origin being a non-food source.

## Description

### Related applications

This application claims the priorities of the following earlier applications: BR10 20210231343 filed on 18/11/2021, BR1020220105758 filed on 30/05/2022 and certificate of addition no. BR1320220223890 filed on 03/11/2022. The content of the present PCT international application is a merger of applications BR 1020220105758 and BR 132022 0223890, duly harmonised into a single text.

### Field of the Invention

The present invention refers to a biodegradable, recyclable, sealable, compostable, thermoformed packaging to be used, among other possible applications, in the packaging of foodstuffs for hot dishes, frozen foods, cold foods, meat cuts and vegetables in general, as well as for personal and household hygiene products, among others, and it also refers to its production method.

### Background of the Invention

Primary packagings for packaging foods for commercialisation, distribution and sale in specialist stores, supermarkets and commercial establishments are known from the state of the art.

These packagings are mostly produced with plastic material and provided with means for their appropriate sealing, which ensure and guarantee the inalterability of the quality of the packaged product, protecting it from contamination by agents and external effects that may affect and interfere with the quality of the food contained therein.

More specifically, the packagings currently produced and known on the market, and belonging to the state of the art, are mostly composed of polymers such as expanded polystyrene and/or coated with PET film and they are not compostable and biodegradable, being difficult and almost impossible to recycle.

The growing and current concerns in all countries of the world with the quality of the environment and the sustainability of the planet have boosted the research and development of materials to be used in the production of food packagings in general which minimise negative impacts on the environment, but also guarantee safety in preserving the quality of the packaged product.

From the state of the art, some solutions for (at least partially) recyclable and/or biodegradable packagings are already known. Some solutions relating to these technologies are described in documents US5213858, JP2004238049, IN202021006382, BR202020012447, JP9175576, JP2002316384, JP2021 160155, US2009072014 and JP2010125796, for example.

Documents US5213858 and IN202021006382 already disclose respective packagings that are - at least partially - biodegradable for perishable goods, such as foodstuffs, the respective packagings being made in layers, the first layer being of paper and the second layer, coating the first, being of a biodegradable resin, said biodegradable resin being of vegetable origin.

On the other hand, each one of the solutions of those documents presents a respective shortcoming and/or deficiency that can be improved. Firstly, none of them point to vegetable polyurethane specifically as the vegetable resin to be used.

In addition, and focusing on each one of them, it is noted that the solution of document US5213858 is not able to go in a cooking oven, as the melting temperature of the polyvinyl alcohol component is 200°C. Furthermore, the solution of this document is also neither totally biodegradable nor totally compostable. Moreover, it is also an object that is difficult to recycle, since in order to do so, a prior separation of the materials that compose it is necessary, taking into account that it is a material laminated with adhesive.

Also, the solution of document IN202021006382 likewise cannot go in the oven, as it uses an acrylic resin (see paragraph 0037 of said Indian document), derived from a vinyl acetate monomer, the melting point of which is 160°C. Furthermore, the manufacturing method for the product disclosed by that document is also very different from the method of the present invention, as will be noted hereinafter.

Specifically, regarding the manufacturing method of the solution of IN202021006382, it comprises the steps of coating an untreated film with a resin, printing on the surface of the resin, metallising some portions of the printed surface, laminating the printed and metallised film with a moisture barrier coated paper using an adhesive, curing the laminated paper, releasing the film from the paper, laminating the paper with a water-soluble film using an adhesive and curing the laminated paper (see paragraph 0014 of this document).

Documents BR202020012447, JP2004238049, JP9175576, JP2002316384, JP2021160155, US2009072014 and JP2010125796 already disclose, each one with its particularity, respective packagings for perishable goods, such as foodstuffs, the respective packagings being made in layers, the first layer being of paper and the second layer, coating the first, being of a biodegradable resin.

Like US5213858 and IN202021006382, those documents also do not provide that the resin in question comprises polyurethane. Furthermore, said documents BR202020012447, JP2004238049, JP9175576, JP2002316384, JP2021160155, US2009072014 and JP2010125796 likewise do not provide that the resin in question is of vegetable origin.

Document BR202020012447, which had not been published at the time of the filing date of document BR102021023134-3, from which the present application claims internal priority, also seems to have drawbacks relating to its ability to go in the oven. This is because it is mentioned that the coating layer can be made of low-density polyethylene (LDPE), for example, which may form bubbles when subjected to the high temperatures of a cooking oven.

In turn, the solution of document JP2004238049 likewise cannot go in a cooking oven, due to the "low" melting temperature of its main compound, polyhydroxybutyrate (PHB), which is 175 to 180°C. Here, it is highlighted that the materials for food trays must withstand at least 220°C. In addition, the product of that document is also not totally biodegradable or compostable and it is difficult to recycle, as it is a laminated material in several layers, which requires separation.

It is reiterated that none of the documents mentioned above provide for a resin of vegetable origin for coating a substrate, to form a composite material (in layers), said resin specifically comprising polyurethane.

Furthermore, another aspect to be taken into consideration concerns the prospect of a possible food shortage around the globe. This is because it is predicted that the world will not have enough food in the future if population growth and consumption continue at the same rate.

More specifically, according to the United Nations (UN), the world's population will reach approximately ten billion by the year 2050 and climate change may cause a loss of around 17% of crops/harvests. Furthermore, arable land around the globe may be reduced by approximately 20%. It is also estimated that emerging countries, such as Brazil, will be responsible for producing 80% of the entire global demand for food.

Given this scenario, the need to economise on vegetable raw materials from non-food sources is evident.

Therefore, although the solutions described above are functional for the objectives for which they were developed, it is noted that there are still gaps in the state of the art regarding the provision of a simple, low-cost and easy-to-manufacture solution able to go in a cooking oven and thus withstand "high" temperatures, which is compostable, recyclable and biodegradable and is also made from a renewable and non-food raw material.

It is on the basis of this scenario that the invention in question arises.

### Objectives of the Invention

Thus, it is a fundamental objective of the invention in question to provide a totally biodegradable, compostable, recyclable, sealable, thermoformable packaging;
More specifically, it is an objective of the present invention to present a solution which is able to withstand conventional and microwave ovens and which presents a barrier to fat and moisture;
It is further an objective of the present invention to describe a simple, low-cost and easy-to-manufacture solution;
Furthermore, it is an objective of the present invention to disclose a solution capable of withstanding high temperatures and therefore able to go in a cooking oven;
Another objective is to describe a solution that is capable of mitigating problems related to sustainability;

It is also an objective of the present invention to provide a solution that is made from a raw material that is renewable and comes from a non-food source.

### Summary of the Invention

The objectives summarised above are achieved by means of a biodegradable packaging, said packaging being composed of layers, being a substrate made of paper, and a coating, coating the substrate, comprising a biodegradable resin, said resin being of vegetable origin, said vegetable origin being a non-food source.

In particular, according to the present invention, said biodegradable resin comprises vegetable polyurethane. Said vegetable origin comprises, in its composition, mainly palmitic, linoleic, stearic and oleic acids. Particularly, said vegetable origin is free of nutritional values. Preferably, said vegetable origin comprises at least one of castor oil and palm oil.

The biodegradable packaging of the present invention is totally biodegradable and totally compostable. Furthermore, it can also be directly recycled in the paper recycling chain.

Preferably, said biodegradable packaging is a primary packaging. Said biodegradable packaging can be sealed with appropriate polymeric films or sealed with a lid of paperboard or paper coated with a biodegradable resin.

Said biodegradable packaging is also impermeable to oils, fats and moisture and it is further able to withstand high temperatures (greater than 220°C), without releasing any harmful substances, exposure to a conventional cooking oven or a microwave oven, as well as a minimum temperature of up to -35°C.

Additionally, the present invention also concerns the method for manufacturing the biodegradable packaging described above, said method comprising the following steps:
Subjecting the substrate to a coating process, in order to apply biodegradable resin onto one side of the substrate to provide a coated material; subjecting the coated material to a curing process; subjecting the already-cured coated material to a thermoforming process to configure a biodegradable packaging.

According to a first possibility, the coating process consists of positioning and tensioning the substrate against at least one roller; moving the substrate along said at least one roller; passing the substrate through a reservoir containing biodegradable resin; applying biodegradable resin onto one side of the substrate; scraping off a portion of the biodegradable resin applied to the substrate, using a height-adjustable cylinder, in order to configure a coated material.

According to a second possibility, the coating process consists of: moving the substrate adjacently to an outlet channel of a reservoir containing biodegradable resin; applying biodegradable resin from the outlet channel of the reservoir onto the surface of the substrate.

More specifically, the curing process consists of subjecting the coated material to a first predetermined temperature for a period of time, in order to catalyse polymerisation and provide an already-cured coated material.

Also more specifically, said thermoforming process consists of heating the already-cured coated material to a second predetermined temperature and moulding it under pressure in order to assume a desired tray format and configure a biodegradable packaging.

Further, in order to finalise the manufacturing method in question, it is possible to place an article to be packaged in the biodegradable packaging, position a lid or a film over the biodegradable packaging and seal said lid onto the biodegradable packaging.

### Brief Description of the Drawings

The invention in question will now be described in detail based on the illustrative figures listed below:

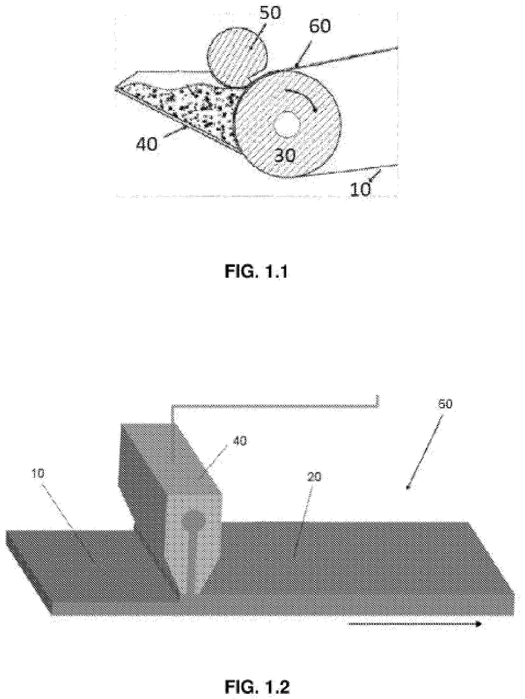

Figure 1.1 schematically illustrates a coating process for manufacturing the preformed product used to make the biodegradable packaging of the present invention;
Figure 1.2 schematically illustrates another coating process for manufacturing the preformed product used to make the biodegradable packaging of the present invention;

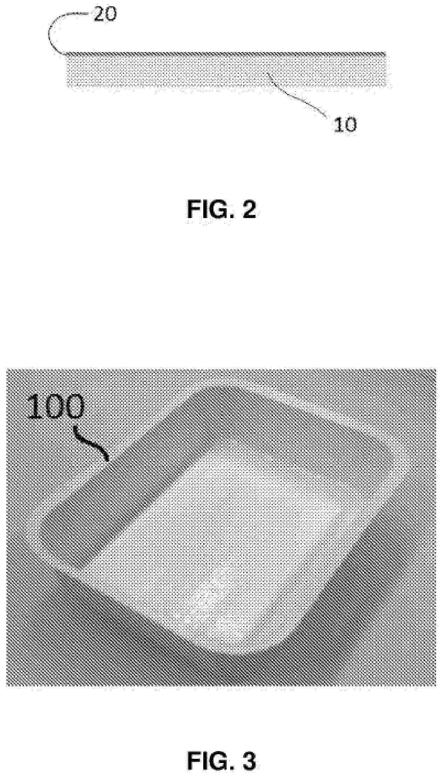

Figure 2 illustrates a schematic view of the coated and already-cured material, i.e. the preformed product used to make the biodegradable packaging of the present invention;
Figure 3 illustrates a view of the final product, i.e. the biodegradable packaging, after the thermoforming process.

### Detailed Description of the Invention

The present invention concerns a biodegradable packaging, said packaging being composed of layers, a first layer - the substrate **10** - being made of paper and a second layer - the coating **20** - coating the first layer, comprising a biodegradable resin, said biodegradable resin being of vegetable origin, said vegetable origin being a non-food source.

More specifically, said biodegradable resin comprises polyurethane (PU). The biodegradable resin of the packaging of the present invention is a liquid bicomponent with 100% solids content, having high flexibility and resistance to abrasion and heat, being composed mainly of PU and vegetable oils.

The biodegradable resin in question (comprising vegetable polyurethane) is the great qualitative differential of the present invention, because in addition to offering mechanical resistance, stability, sealing and a barrier to fats and moisture for the functionality of the packaging, it is totally compostable, totally biodegradable and recyclable, meaning that the final product **100** (the biodegradable packaging) is also provided with these attributes.

With regard to the vegetable origin of the biodegradable resin, so that the desired effects of the present invention are achieved, it is essential that it comprises, in its composition, mainly palmitic, linoleic, stearic and oleic acids.

More specifically, the vegetable origin in question comes from a non-food source, i.e. plants (vegetables, trees, leaves, among others) without nutritional values and/or which cannot be used as a food source.

Preferably, an example of raw material of vegetable origin and a non-food source that can be used to produce the biodegradable resin in question is castor oil or palm oil or both, known to be inedible, i.e. not used as a food source.

Furthermore, it should be noted that regarding the recycling of said recyclable and biodegradable packaging, it can be directly recycled in the paper recycling chain, i.e. without the need for prior separation of the materials that compose it, as is the case of packages laminated with adhesive, according to the state of the art described above.

Also preferably, the recyclable and biodegradable packaging of the present patent application is a primary packaging. Primary packagings are designated as such due to the fact that they are in direct contact with the product, i.e. with the product contained inside them, being responsible for protecting and maintaining the quality of the packaged product unaltered.

The biodegradable packagings of the present invention are preferably produced using paper as material for the substrate **10** and, even more specifically, mixed fibre paperboard, subjecting the paper to a coating process with vegetable resin - comprising vegetable polyurethane - obtained from natural, renewable and non-food resources.

Both the paper (cardboard) and the biodegradable resin (comprising vegetable PU) can go in the freezer, as they withstand a minimum temperature of -35°C, and they also meet the requirements for cooking at a high temperature (i.e. they withstand a maximum temperature of 280°C), meaning that the biodegradable packaging of the invention can go in the oven and still maintain protection against fats and moisture, also allowing future sealing with PET film (if applicable) or, alternatively and preferably, sealing with a lid of paper or paperboard coated with the vegetable resin.

The substrate **10,** i.e. the first layer of the biodegradable packaging in question is, as mentioned above, preferably made of paperboard, which is produced with low-migration components, is suitable for direct contact with foodstuffs and is able to withstand, without loss of quality of the packaged product, a microwave oven and a conventional oven.

The paperboard in question can be produced from a mixture of long and short wood fibres, as previously mentioned. The long fibre is more malleable and the short fibre has greater mechanical resistance.

Paperboard is the preferred base raw material (substrate **10**) of the product of the present patent application, making it possible to achieve high mechanical resistance and thermoforming properties, in order to obtain the correct balance between malleability and rigidity, acceptability and assimilation of the biodegradable resin (comprising vegetable PU), so that during the coating process it is possible to block the surface and all the pores of the substrate **10.**

According to one possibility, the process for coating the substrate **10** can be a process known industrially as *comma roll* or *comma coating* or, alternatively, a rotogravure process. These coating processes consist of moving the substrate along at least one roller **30,** passing the substrate **10** through a reservoir **40** containing biodegradable resin in order to carry out the application of said biodegradable resin on one side of the substrate **10** and then scraping off the excess biodegradable resin applied to the substrate **10,** said scraping being carried out by a height-adjustable cylinder **50,** in order to ensure uniform and optimum application of the coating **20** and define a coated material **60.**

According to another possibility, the process for coating the substrate **10** can be a process known industrially as *slot die.* This coating process consists of moving the substrate **10** adjacently to an outlet channel of a reservoir **40** containing biodegradable resin, applying biodegradable resin from the outlet channel of the reservoir **40** onto the surface of the substrate **10,** in order to ensure uniform and optimum application of the coating **20** and define a coated material **60.**

After that, said coated material **60** undergoes the polymerisation reaction, said reaction being catalysed through exposure to high temperature, by way of a method that is clean and environmentally-friendly, as it does not release toxic gases.

The polymerisation or "heating" system is responsible for curing the biodegradable resin, which, when subjected to a specific temperature, has an accelerated polymerisation reaction in order to make the coating process viable. The polymerisation reaction can be accelerated by different heating means, such as heated air flow or microwaves, both of which are efficient.

After that, a thermoforming process is carried out to configure the final product **100,** i.e. the biodegradable packaging, which preferably assumes the format of a tray. Said process for thermoforming the packaging is carried out by means of a mould heated to a high temperature and using pressure, allowing the already-cured coated material **60,** i.e. the substrate film **10** already coated with a biodegradable resin, to be moulded, giving to the final product **100** different possible formats and features, according to the destination and purpose of the biodegradable packaging in question.

Therefore, the object of the present patent application consists of a biodegradable packaging for foodstuffs and products in general, being thermoformed, sealable, recyclable and compostable, produced according to a differentiated and innovative method, which results in a product with differentiated qualities and advantages in relation to the products already known on the market and belonging to the state of the art.

In addition to the advantages already mentioned, said biodegradable packaging is also impermeable to oils, fats and moisture.

It is important to emphasise that the above description has the sole purpose of describing, by way of example, the particular embodiment of the invention in question. Therefore, it is clear that modifications, variations and constructive combinations of elements that perform the same function, in substantially the same manner, to achieve the same results, remain within the scope of protection delimited by the appended claims.

## Claims

1. Biodegradable packaging, said packaging being composed of layers, being a substrate (10) made of paper, and a coating (20), coating the substrate (10), comprising a biodegradable resin, said biodegradable packaging **CHARACTERISED in that** said resin is of vegetable origin, said vegetable origin being a non-food source.

2. Biodegradable packaging, according to claim 1, **CHARACTERISED in that** said biodegradable resin comprises vegetable polyurethane.

3. Biodegradable packaging, according to claim 1, **CHARACTERISED in that** the vegetable origin comprises, in its composition, mainly palmitic, linoleic, stearic and oleic acids.

4. Biodegradable packaging, according to claim 1, **CHARACTERISED in that** the vegetable origin is free of nutritional values.

5. Biodegradable packaging, according to claim 4, **CHARACTERISED in that** the vegetable origin comprises at least one of castor oil and palm oil.

6. Biodegradable packaging, according to claim 1, **CHARACTERISED in that** it is totally biodegradable and totally compostable.

7. Biodegradable packaging, according to claim 1, **CHARACTERISED in that** it can be directly recycled in the paper recycling chain.

8. Biodegradable packaging, according to claim 1, **CHARACTERISED in that** the biodegradable packaging is a primary packaging.

9. Biodegradable packaging, according to claim 1, **CHARACTERISED in that** it can be sealed with appropriate polymeric films.

10. Biodegradable packaging, according to claim 1, **CHARACTERISED in that** it can be sealed with a lid of paperboard or paper coated with a biodegradable resin.

11. Biodegradable packaging, according to claim 1, **CHARACTERISED in that** it is impermeable to oils, fats and moisture.

12. Biodegradable packaging, according to claim 1, **CHARACTERISED in that** it is able to withstand, without releasing any harmful substances, exposure to a conventional cooking oven or a microwave oven.

13. Biodegradable packaging, according to claim 1, **CHARACTERISED in that** it is able to withstand a temperature of up to -35°C.

14. Method for manufacturing a biodegradable packaging, as defined in claim 1, **CHARACTERISED in that** it comprises the following steps: submitting the substrate (10) to a coating process, in order to apply biodegradable resin on one side of the substrate (10) to provide a coated material (60); subjecting the coated material (60) to a curing process; subjecting the already-cured coated material (60) to a thermoforming process to configure a biodegradable packaging.

15. Method for manufacturing a biodegradable packaging, according to claim 14, **CHARACTERISED in that** the coating process consists of: positioning and tensioning the substrate (10) along at least one roller (30); moving the substrate (10) along said at least one roller (30); passing the substrate (10) through a reservoir (40) containing biodegradable resin; applying biodegradable resin onto one side of the substrate (10); scraping off a portion of the biodegradable resin applied to the substrate (10), using a height-adjustable cylinder (50), in order to configure a coated material (60).

16. Method for manufacturing a biodegradable packaging, according to claim 14, **CHARACTERISED in that** the coating process consists of: moving the substrate (10) adjacently to an outlet channel of a reservoir (40) containing biodegradable resin; applying biodegradable resin from the outlet channel of the reservoir (40) onto the surface of the substrate (10).

17. Method for manufacturing a biodegradable packaging, according to claim 14, **CHARACTERISED in that** the curing process consists of subjecting the coated material (60) to a first predetermined temperature for a period of time, in order to catalyse polymerisation and provide an already-cured coated material (60).

18. Method for manufacturing a biodegradable packaging, according to claim 14, **CHARACTERISED in that** the thermoforming process consists of: heating the already-cured coated material (60) to a second predetermined temperature and moulding it under pressure in order to assume a desired tray format and configure a biodegradable packaging.

19. Method for manufacturing a biodegradable packaging, according to claim 14, **CHARACTERISED in that** it further comprises: placing an article to be packaged in the biodegradable packaging; positioning a lid or a film over the biodegradable packaging and realising the sealing.
